# FASCICULE DE BREVET EUROPEEN

(11) **EP 3 394 145 B1**
(45) Date de publication et mention de la délivrance du brevet: **16.12.2020**
(21) Numéro de dépôt: 16825784.8
(22) Date de dépôt: 23.12.2016
(51) Int. Cl.: C08G 59/50, B29C 70/52, B29D 99/00

(54) **PROFILÉ LONGITUDINAL DE RENFORCEMENT POUR CONDUITE TUBULAIRE FLEXIBLE**
LÄNGSVERSTEIFUNGSPROFIL FÜR BIEGSAME ROHRLEITUNG
LONGITUDINAL REINFORCING PROFILE FOR FLEXIBLE TUBULAR PIPE

(30) Priorité: 24.12.2015 FR 1563335
(43) Date de publication de la demande: 31.10.2018
(73) Titulaire: Technip N-Power, 92400 Courbevoie (FR); Epsilon Composite, 33340 Gaillan (FR)
(72) Inventeur: LULL, Stéphane, Hourtin 33990 (FR); PORTOLES, José, 33340 Queyrac (FR); DO, Anh Tuan, 95240 Cormeilles En Parisis (FR)
(74) Mandataire: Lavoix
(86) Numéro de dépôt international: PCT/EP2016/082657
(87) Numéro de publication internationale: WO 2017/109221

(56) Documents cités:
- EP-A1- 2 738 202
- WO-A1-2013/131972
- FR-A1- 2 776 358
- FR-A1- 3 006 032

## Description

La présente invention concerne un profilé longitudinal de renforcement d'une conduite tubulaire flexible pour le transport de fluides d'hydrocarbures, ainsi qu'un procédé de fabrication de ce profilé longitudinal de renforcement. La présente invention concerne aussi une conduite tubulaire flexible comportant au moins une couche de renfort réalisée par enroulement hélicoïdal de ce profilé longitudinal de renforcement.

Il est connu d'après l'article « Development of light weight flexible risers for ultra deep water applications » publié lors de la conférence Deep Offshore Technology de 2000, d'utiliser le carbone comme matériau constitutif de conduite sous-marine. En effet, les fibres de carbone possèdent de bonnes propriétés mécaniques de résistance à la traction et à la fatigue, mais également une bonne tenue chimique au vieillissement en milieu humide et corrosif.

Il est également connu de l'état de la technique d'utiliser des matériaux composites chargés en fibres de carbone pour remplacer les couches d'armure métallique de résistance aux efforts de traction. Le brevet FR 2776358 divulgue la fabrication et l'intégration de profilé composite comportant un taux de fibres élevé, pour des armures de conduite flexible utilisée en condition de mer profonde. Ce profilé composite comporte des mèches filamentaires longitudinales, par exemple en carbone, distribuées au sein d'une matrice polymérique thermoplastique ou thermodurcissable.

Cependant, le choix des matériaux pour la réalisation de tels profilés composites doit être rigoureux si l'on souhaite obtenir d'excellentes propriétés de résistance chimique et thermique. En effet, la nature des fibres de renfort et/ou la nature de la matrice polymérique influent sur les caractéristiques de mise en œuvre des profilés composites ainsi que sur leurs propriétés finales.

Il est connu de l'état de la technique de réaliser, par exemple, des matrices polymériques à base d'une résine époxyde. A cet effet, on utilise un pré-polymère époxyde que l'on mélange avec un agent durcisseur.

Lorsqu'est recherché l'obtention d'une matrice polymérique offrant une bonne tenue chimique et qui soit résistante à l'hydrolyse, l'homme du métier sait qu'il doit orienter son choix vers un agent durcisseur comprenant une amine aromatique. En mélangeant un tel agent durcisseur avec la résine époxyde, il est capable d'obtenir une matrice polymérique (ou système {résine époxyde/agent durcisseur}) qui se prête convenablement à la fabrication d'élément de structure réalisé par moulage. Cependant le système {époxyde/amine aromatique} ne convient pas à la réalisation d'élément de structure allongé mise en œuvre par le procédé de pultrusion. En effet, ce système possède une cinétique de polymérisation très lente, nécessitant un apport thermique important, ce qui ne permet pas l'obtention en continu d'une production d'élément de structure allongé qui soit fiable.

Alternativement, l'homme du métier peut alors s'intéresser à l'utilisation d'un agent durcisseur comprenant une amine cyclo-aliphatique. L'homme du métier sait que ce type d'agent durcisseur est mieux adapté à la réalisation d'élément de structure de grande longueur mis en œuvre par pultrusion car il nécessite un apport thermique moindre pour que le système polymérise. Néanmoins, la résistance à l'hydrolyse du produit final obtenu après pultrusion est moins bonne que si l'on utilisait un agent durcisseur comprenant une amine aromatique.

Ainsi, un problème qui se pose et que vise à résoudre la présente invention est de fournir un profilé composite qui résiste mieux aux températures élevées ainsi qu'à l'hydrolyse lorsque la conduite tubulaire flexible est exploitée dans des conditions de production sévères.

En vue de résoudre ce problème, la présente invention concerne un profilé longitudinal de renforcement en composite comprenant des fibres longitudinales de carbone noyées dans une matrice résineuse polyépoxyde obtenue par polymérisation d'un mélange thermodurcissable comportant un pré-polymère époxyde (i) et au moins un agent durcisseur (ii) et optionnellement un catalyseur,
caractérisé en ce que :
- le pré-polymère époxyde (i) est un DiGlycidyl Ether de Bisphénol A (DGEBA) ou un DiGlycidyl Ether de Bisphénol F (DGEBF) ou un TétraGlycidyl Méthylène DiAniline (TGMDA) ;
- le au moins un agent durcisseur (ii) est une amine cyclo-aliphatique ou une amine aromatique, ou un mélange d'une amine cyclo-aliphatique avec une amine aromatique; et le ratio P1 /P2 entre d'une part la proportion pondérale Pi du au moins un agent durcisseur (ii) dans le mélange thermodurcissable et d'autre part la proportion pondérale P2 du pré-polymère (i) dans le mélange thermodurcissable est compris entre 15% et 30%, et préférentiellement égale à 25%.

Au sens de la demande, par « amine cyclo-aliphatique », on entend un composé comprenant au moins un cycle aliphatique et au moins une fonction amine, de préférence deux cycles aliphatiques et deux fonctions aminés. Les cycles aliphatiques saturés, tels que le cyclohexyle, sont particulièrement préférés. La fonction amine est de préférence une amine primaire -NH₂. L'amine cyclo-aliphatique comprend typiquement de 5 à 50 atomes de carbone et de 1 à 10 atomes d'azote. Une liste non-exhaustive de ces amines cycloaliphatiques est donnée dans la publication "Cycloaliphatic Amines" (Encyclopaedia of Chemical Technology, Kirk-Othmer, 4th Edition (1992), pp. 386-405). Elles répondent notamment à la formule générale suivante : 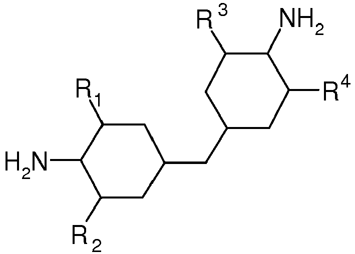 dans laquelle R¹, R², R³ et R⁴ représentent indépendamment un groupe choisi parmi un atome d'hydrogène ou un alkyle de 1 à 6 atomes de carbone.

De préférence, l'agent durcisseur à base d'une amine cyclo-aliphatique est sélectionné parmi les agents durcisseurs de type amine cyclo-aliphatique commercialisés par la société Huntsman sous la dénomination ARADUR®.

Par exemple, l'amine cyclo-aliphatique est la 4,4'-diamino-3,3'-dimethyl-dicyclohexylméthane, telle que commercialisée sous la référence ARADUR® 2954.

Au sens de la demande, « amine aromatique », on entend un composé comprenant au moins un cycle aromatique, typiquement au moins un phényle, et au moins une fonction amine, de préférence deux fonctions amines. La fonction amine est de préférence une amine primaire -NH₂. L'amine aromatique comprend typiquement de 6 à 50 atomes de carbone et de 1 à 10 atomes d'azote. Par exemple, l'amine aromatique est le méthylène dianiline, la m-phénylène diamine ou la diaminophényl sulfone.

De préférence, l'agent durcisseur à base d'une amine aromatique est sélectionné parmi les agents durcisseurs de type amine aromatique commercialisés par la société Huntsman sous la dénomination ARADUR®, tel que l'ARADUR® 5200.

L'agent durcisseur à base d'un mélange d'une amine cyclo-aliphatique avec une amine aromatique est par exemple sélectionné parmi les agents durcisseurs commercialisés par la société Huntsman sous la dénomination Ren© HY 5211 ou Ren© HY 5212.

Ces gammes de durcisseurs permettent au profilé longitudinal objet de la présente invention obtenu par la polymérisation d'un mélange thermodurcissable comportant les composants chimiques précités, de bénéficier de bonnes propriétés de résistance thermique, mécanique, électrique et chimique.

Ainsi, une telle caractéristique selon l'invention permet d'améliorer les propriétés mécaniques, de tenue à l'hydrolyse (corrosion) des profilés longitudinaux de renforcement en composite lorsque ceux-ci sont en contact avec un milieu environnant corrosif et soumis à des températures élevées, par exemple à l'intérieur d'un annulaire interne de conduite flexible sous-marine.

Les fibres de carbone possèdent des propriétés mécaniques relativement élevées en comparaison d'autres types de fibres telles que certaines fibres de verre ou d'aramide. De plus, les fibres de carbone résistent à des températures élevées, et présentent une bonne tenue chimique. Ainsi, elles résistent bien à la corrosion et aux phénomènes de fragilisation par l'hydrogène.

Par ailleurs, les résines polyépoxydes particulières utilisées pour mettre en œuvre la présente invention possèdent une excellente tenue chimique à la corrosion en milieu acide ainsi qu'une bonne tenue aux températures élevées comparativement aux résines polyesters. Elles possèdent également de très bonnes caractéristiques mécaniques en traction, en compression en cisaillement ou encore en allongement.

En outre, la combinaison des fibres de carbone avec une matrice particulière selon la présente invention permet d'obtenir un matériau composite présentant des propriétés mécaniques élevées, pouvant supporter une température élevée dans un environnement extrêmement corrosif.

Le profilé longitudinal de renforcement en composite selon l'invention peut comprendre l'une ou plusieurs des caractéristiques suivantes, prises isolément ou en combinaison :
- préférentiellement, le mélange thermodurcissable a une viscosité mesurée à 25°C, comprise entre 1000 mPa.s et 6000 mPa.s, de préférence entre 2000 mPa.s et 5000 mPa.s. et avantageusement une viscosité mesurée entre 40°C et 80°C comprise entre 100 mPa.s et 1200 mPa.s afin d'améliorer l'imprégnation des fibres ;
- préférentiellement, le catalyseur est choisi parmi les monomères phénoliques tels que le bisphénol A ou parmi les monomères amines tels que la Benzyl Di-MethylAmine (BDMA) pour accélérer la réaction de polymérisation de la matrice résineuse thermodurcissable ;
- préférentiellement, le ratio P₃/P₂ entre d'une part la proportion pondérale P₃ du bisphénol A dans le mélange thermodurcissable et d'autre part la proportion pondérale P₂ du pré-polymère (i) dans le mélange thermodurcissable est compris entre 1% et 5%, et préférentiellement égale à 3% ;
- de manière avantageuse, la température maximale d'utilisation en continu du profilé longitudinal de renforcement en composite est supérieure à 100°C ;
- avantageusement, ce profilé longitudinal de renforcement est fabriqué par pultrusion.

Par « monomère phénolique », on entend un composé chimique comprenant au moins un phénol, généralement au moins deux phénols, tel qu'un bisphénol, de préférence le bisphénol A.

Par monomère amine, on entend un composé chimique comprenant au moins une fonction amine, de préférence au moins une fonction amine tertiaire, par exemple le tris-(dimethylaminomethyl)phénol, la Benzyl Di-MethylAmine (BDMA) ou la triéthanolamine.

Généralement, les dimensions du profilé longitudinal de renforcement en composite sont telles que :
- sa longueur est comprise de 500 mètres à 5000 mètres, et/ou
- sa largeur est supérieure ou égale à 10 millimètres, voire supérieure à 25 millimètres, et de préférence elle est comprise de 10 millimètres à 30 millimètres, et/ou
- son épaisseur est supérieure ou égale à 0,5 millimètre, de préférence elle est comprise de 0,5 millimètre à 30 millimètres.

L'invention se rapporte également à un procédé de fabrication par pultrusion d'un profilé longitudinal de renforcement tel que décrit ci-avant, comportant les étapes successives de :
a) préchauffage des fibres longitudinales à une température comprise entre 150°C et 180°C ;
b) imprégnation des fibres longitudinales à l'aide d'un film de mélange thermodurcissable à une température comprise 40°C et 80°C et lancement de la polymérisation du mélange thermodurcissable ;
c) préformation ou conformation du profilé longitudinal et poursuite de la polymérisation du mélange thermodurcissable ;
d) étuvage ou post-cuisson du profilé longitudinal à une température d'au moins 180°C pendant au moins 1h.

En outre, avantageusement, le procédé de fabrication selon l'invention peut comprendre l'une ou plusieurs des caractéristiques suivantes, prises isolément ou en combinaison :
- il comporte entre l'étape b) et l'étape c), une étape b1) d'application d'au moins un voile de renfort sur au moins une des faces du profilé longitudinal ;
- il comporte une étape de préséchage et préchauffage du au moins un voile de renfort avant l'étape b1) ;
- il comporte après l'étape e), une étape de découpage du profilé longitudinal.

Enfin, l'invention se rapporte aussi à une conduite tubulaire flexible pour le transport de fluides d'hydrocarbures comportant une gaine interne d'étanchéité et au moins une couche de renfort comportant une pluralité de profilés longitudinaux de renforcement selon l'invention.

La conduite tubulaire flexible selon l'invention peut comprendre l'une ou plusieurs des caractéristiques suivantes, prises isolément ou en combinaison :
- la pluralité de profilés longitudinaux est enroulée hélicoïdalement ;
- la couche de renfort comportant la pluralité de profilés longitudinaux est une nappe d'armures de résistance à la traction ;
- la couche de renfort comportant la pluralité de profilés longitudinaux est une nappe d'armures de résistance à la pression ;
- la couche de renfort comportant la pluralité de profilés longitudinaux est située à l'extérieur de la gaine interne d'étanchéité ;
- la conduite tubulaire flexible comporte une carcasse métallique située à l'intérieur de la gaine interne d'étanchéité ;
- la conduite tubulaire flexible comporte une gaine externe d'étanchéité entourant la couche de renfort comportant la pluralité de profilés longitudinaux.

L'invention sera mieux comprise à la lueur de la description qui va suivre, en référence aux dessins annexés dans lesquels :
- la Figure 1 est une vue schématique partielle en écorché d'une conduite tubulaire flexible selon l'invention ;
- la Figure 2 est une vue schématique partielle en coupe d'un profilé longitudinal de renforcement, conformément à l'invention ;
- la Figure 3 est une vue schématique d'un procédé de fabrication d'un profilé longitudinal de renforcement du type de celui représenté en Figure 2.

Dans la description qui va suivre, le terme « interne » désigne tout élément le plus proche d'un axe longitudinal Δ et, inversement, le terme « externe » désigne tout élément le plus éloigné de l'axe longitudinal Δ.

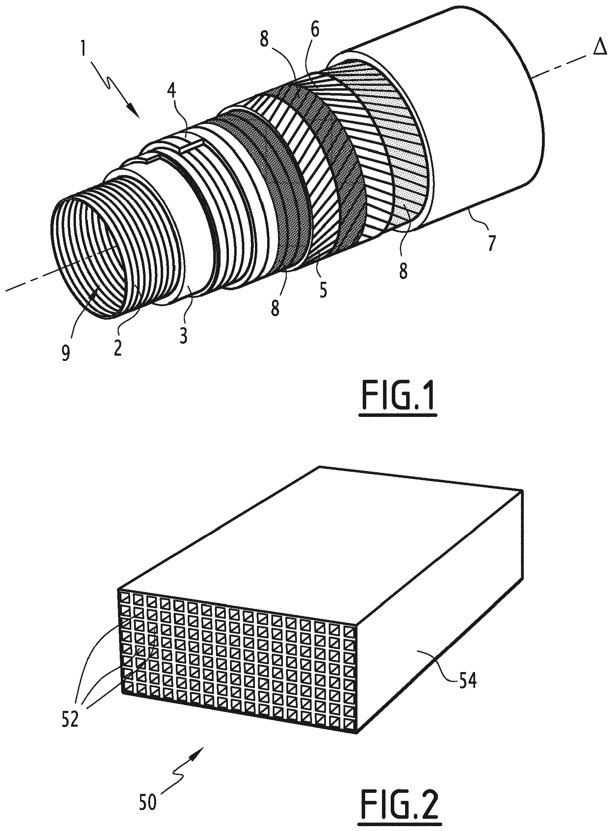

Une conduite 1 tubulaire flexible selon l'invention est représentée schématiquement en Figure 1. La conduite 1 est destinée au transport d'un fluide d'hydrocarbures depuis le fond marin jusqu'en surface ou elle est reliée à une installation offshore, telle que des conduites sous-marines montantes (« risers » en langue anglaise). La distance séparant le fond marin de la surface est par exemple comprise entre 200 mètres et 4000 mètres.

La conduite 1 peut aussi se destiner au transfert de fluides d'hydrocarbures entre deux unités flottantes, par exemple entre deux unités de production, stockage et déchargement du type FPSO (Floating Production, Storage & Offloading) ou, entre une plateforme pétrolière ou un FPSO et une bouée de déchargement. On appelle ce type de conduite, une ligne d'export (« export line » en langue anglaise).

La structure de la conduite 1 est formée par une superposition de plusieurs couches disposées les unes au-dessus des autres.

La couche la plus interne de la conduite 1 est généralement une carcasse 2 métallique qui définit une zone d'écoulement 9 pour le transport du fluide d'hydrocarbures extrait du gisement pétrolier. La carcasse 2 est réalisée par l'enroulement à pas court d'un feuillard profilé, c'est-à-dire que la valeur absolue de l'angle d'hélice que fait le feuillard profilé avec l'axe Δ est comprise entre 70° et 90°. La carcasse 2 permet de reprendre les efforts radiaux d'écrasement.

Autour de cette carcasse 2 est extrudée une première gaine en polymère également appelée gaine de pression 3 ou gaine interne d'étanchéité, destinée à confiner le transport du fluide d'hydrocarbures dans la zone d'écoulement 9. Le matériau polymère permettant de réaliser la gaine de pression 3 est choisi parmi les familles de polymères telles que les polyoléfines, les polyamides ou bien les polymères fluorés tels que le PVDF (polyfluorure de vinylidène).

Au-dessus de la gaine interne d'étanchéité 3 est disposée une première couche de renfort appelée voûte de pression. Celle-ci est destinée à reprendre les efforts radiaux générés par la circulation du fluide d'hydrocarbure sous pression au sein de la zone d'écoulement 9, et ainsi à éviter l'éclatement de la gaine interne d'étanchéité 3. La voûte de pression comporte une ou plusieurs nappes d'armures de résistance à la pression 4, les armures de ces nappes se présentant sous la forme de profilés longitudinaux enroulés hélicoïdalement à pas court, typiquement selon un angle d'hélice de valeur absolue comprise entre 70° et 90° par rapport à l'axe Δ. La caractéristique selon laquelle la valeur absolue de l'angle d'hélice est proche de 90° confère à la nappe d'armures une grande résistance à la pression.

Généralement, la conduite 1 ne comporte qu'une seule nappe d'armures de résistance à la pression 4 disposée directement au-dessus de la gaine interne d'étanchéité 3, et formée de profilés agrafés entre eux, par exemple des profilés en forme de Z, de T, de U, ou de K, etc... Cependant, la conduite 1 peut aussi comporter plusieurs nappes superposées d'armures de résistance à la pression, afin d'augmenter sa résistance à la pression. Dans ce cas, la nappe interne est généralement formée de profilés agrafés tandis que la nappe externe est formée de profilés non agrafés de section sensiblement rectangulaire.

Au-dessus de la voûte de pression est disposée au moins une autre couche de renfort destinée à reprendre les efforts longitudinaux de traction exercés sur la conduite 1. Cette autre couche de renfort comprend au moins une nappe d'armures de résistance à la traction 5,6, ces armures se présentant sous la forme de profilés longitudinaux enroulés hélicoïdalement à pas long, typiquement selon un angle d'hélice de valeur absolue comprise entre 20° et 60° par rapport à l'axe Δ. La caractéristique selon laquelle la valeur absolue de l'angle d'hélice est inférieure à 60° confère à la nappe d'armures une grande résistance à la traction

Généralement, la conduite 1 comporte au moins une paire de nappes d'armures de résistance à la traction 5,6 qui sont superposées et croisées entre elles, ce qui permet d'équilibrer la conduite 1 en torsion. Dans le cas où les nappes d'armures de résistance à la traction 5,6 sont enroulées avec un angle d'hélice de valeur absolue proche de 55°, la voûte de pression est optionnelle car cet angle d'hélice particulier confère aux nappes d'armures 5,6 une capacité à reprendre à la fois des efforts longitudinaux et radiaux.

Enfin, et de manière préférentielle, on vient extruder une seconde gaine en polymère également appelée gaine externe d'étanchéité 7 autour des couches de renfort 4 ; 5,6. Le matériau polymère permettant de réaliser la gaine externe d'étanchéité 7 est choisi parmi les mêmes familles que celles données ci-dessus pour la gaine de pression 3. La gaine externe d'étanchéité 7 permet notamment d'éviter que les couches de renfort soient en contact direct avec le milieu extérieur à la conduite 1, notamment avec l'eau de mer.

Bien entendu, d'autres couches intermédiaires formées à partir d'un matériau polymérique ou bien à partir d'un matériau métallique ou composite peuvent être intercalées entre les couches précédemment décrites.

Ainsi, la conduite 1 peut comporter d'autres gaines polymériques ou des bandes polymériques intercalées entre une ou plusieurs des couches précédemment décrites. La conduite 1 peut notamment comporter une gaine intermédiaire d'étanchéité, ou d'isolation thermique ou encore de neutralisation des gaz corrosifs du type H2S et CO2. Elle peut aussi comporter un ou plusieurs couches constituées d'enroulement de bandes polymériques, par exemple une couche anti-usure intercalée entre deux couches de renfort, ou encore une couche d'isolation thermique.

Selon une variante de réalisation de l'invention, la conduite 1 tubulaire flexible comprend au moins une couche telle qu'une gaine (ou une bande) de mousse polymérique d'isolation thermique 8 extrudée (ou enroulée) entre la nappe d'armures de résistance à la pression 4 et la première nappe d'armures de résistance à la traction 5 et/ou entre la première nappe d'armures de résistance à la traction 5 et la deuxième nappe d'armures de résistance à la traction 6 et/ou entre la deuxième nappe d'armures de résistance à la traction 6 et la gaine externe d'étanchéité 7. La couche d'isolation thermique est par exemple réalisée à partir d'une bande en polytétrafuoroéthylène (PTFE), d'une mousse à base de polychlorure de vinyle (PVCC) ou polypropylène (PP), etc.

La conduite 1 telle que décrite précédemment en Figure 1 est dite du type « rough-bore » ou possédant une zone d'écoulement 9 à passage non lisse, c'est-à-dire que la couche la plus interne de sa structure est la carcasse 2. En revanche, lorsque la couche la plus interne n'est pas la carcasse 2 mais la gaine de pression 3, la conduite est dite du type « smooth-bore » ou possédant une zone d'écoulement 9 à passage lisse.

De plus, la conduite 1 selon l'invention est du type non liée (« unbonded » en anglais), c'est-à-dire qu'au moins deux couches adjacentes de la conduite 1 peuvent se mouvoir axialement l'une par rapport à l'autre lorsque la conduite 1 est soumise à une flexion.

Ces types de conduites sont bien connus de l'homme du métier et sont également décrites dans les documents normatifs API 17J « Specification for Unbonded Flexible Pipe » et API RP 17B « Recommended Practice for Flexible Pipe » publiés par l'American Petroleum Institute (API).

Dans la suite du texte, le terme de polymérisation est employé pour désigner une réaction chimique entre au moins deux composants de faible poids moléculaire en vue de la formation ultérieure d'un composé de poids moléculaire plus élevé. Pour les résines thermodurcissables, la polymérisation (ou réticulation) correspond à la formation d'un réseau tridimensionnel obtenu par réaction entre un pré-polymère, un durcisseur (ou agent polymérisant / réticulant) et une action calorifique. Eventuellement, un catalyseur ou accélérateur peut être ajouté afin d'accélérer la réaction de réticulation. La réaction de réticulation donne ainsi naissance à la création de liaisons entre les chaînes macromoléculaires respectives du pré-polymère et du durcisseur.

Est représentée sur la Figure 2, une vue en coupe transversale d'un fil de forme ou profilé longitudinal 50 de renforcement en composite. Le profilé longitudinal 50 se présente sous la forme d'un ruban plat renforcé avec des fibres longitudinales 52 de carbone noyées dans une matrice 54 polymérique. Les fibres longitudinales 52 sont généralement agencées sous forme de mèches longitudinales comportant une pluralité de fibres liées mécaniquement les unes aux autres comme décrit dans la demande internationale WO 2013/131972. La matrice 54 polymérique est une résine époxydique mono-composant ou bi-composants. Elle est obtenue par polymérisation d'un mélange thermodurcissable comportant un pré-polymère époxyde (i) et au moins un agent durcisseur (ii) de type amine, tel que ceux décrits précédemment.

Plus précisément, le pré-polymère époxyde (i) est choisi parmi le DiGlycidyl Ether de Bisphénol A (DGEBA), le DiGlycidyl Ether de Bisphénol F (DGEBF) ou encore le TétraGlycidyl Méthylène DiAniline (TGMDA).

L'agent durcisseur (ii) est choisi parmi la famille des amines cyclo-aliphatiques ou des amines aromatiques, ou encore parmi un mélange d'une amine cyclo-aliphatique et d'une amine aromatique.

Le mélange thermodurcissable comprend le pré-polymère époxyde (i) et le au moins un agent durcisseur (ii) mélangés dans des proportions pondérales variables. Avantageusement, le ratio P₁/P₂ entre d'une part la proportion pondérale P₁ du au moins un agent durcisseur (ii) dans le mélange thermodurcissable et d'autre part la proportion pondérale P₂ du pré-polymère (i) dans le mélange thermodurcissable est compris entre 15% et 30%, et préférentiellement égale à 25%.

Optionnellement, on ajoute un catalyseur dans le mélange thermodurcissable. Le catalyseur est choisi parmi les monomères époxydiques, par exemple le bisphénol A ou les monomères amines, par exemple la Benzyl Di-MethylAmine (BDMA). Le ratio P₃/P₂ entre d'une part la proportion pondérale P₃ du bisphénol A dans le mélange thermodurcissable et d'autre part la proportion pondérale P₂ du pré-polymère (i) dans le mélange thermodurcissable est préférentiellement compris entre 1% et 5%, et préférentiellement égale à 3%.

A titre d'exemple, si le mélange thermodurcissable comprend 100 grammes de pré-polymère époxyde (i), 25 grammes d'un au moins agent durcisseur (ii) et 3 grammes d'un catalyseur, les proportions pondérales respectives de ces composants chimiques dans le mélange thermodurcissable sont les suivantes :
- Proportion pondérale du pré-polymère époxyde (i) dans le mélange thermodurcissable : (P₂) = 100g/128g = 0,781 = 78,1% ;
- Proportion pondérale du au moins un agent durcisseur (ii) dans le mélange thermodurcissable : (P₁) = 25g/128g = 0,195 = 19,5%; et
- Proportion pondérale du catalyseur dans le mélange thermodurcissable : (P₃) = 3g/128g = 0,024 = 2,4%.
D'où, P₁/P₂ = 25g/100g = 0,25 = 25% et P₃/P₂ = 3g/100g = 0,03 = 3%.

Les composants de la matrice résineuse polyépoxyde décrite ci-dessus ont été sélectionnés en raison de leurs excellentes caractéristiques techniques et de leur compatibilité avec les fibres longitudinales 52 de carbone et leurs ensimages. En effet, le pré-polymère époxyde entrant dans la composition du mélange thermodurcissable possède une pureté élevée et une viscosité faible. De la sorte, la viscosité du mélange thermodurcissable mesurée à température ambiante (≈ 25°C) selon la norme EN ISO 12058-1 :1997 intitulée « Plastiques - Détermination de la viscosité au moyen d'un viscosimètre à chute de bille - Partie 1 : méthode du tube incliné » est comprise entre 1000 mPa.s et 6000 mPa.s, de préférence entre 2000 mPa.s et 5000 mPa.s. En outre, dans la plage de température de fabrication de la matrice résineuse polyépoxyde, comprise entre 40°C et 80°C, la viscosité du mélange thermodurcissable chute pour atteindre des valeurs comprises entre 100 mPa.s et 1200 mPa.s. Cette chute de viscosité a pour effet favorable d'améliorer l'imprégnation des fibres de carbone.

Selon un premier mode de réalisation préféré, le pré-polymère époxyde (i) est un DiGlycidyl Ether de Bisphénol A (DGEBA), et le au moins un agent durcisseur (ii) est un mélange d'une amine cyclo-aliphatique (A) avec une amine aromatique (B). En outre, avantageusement, la proportion en poids (amine cyclo-aliphatique (A) : amine aromatique (B)) varie entre (5 : 95) à (25 : 75), et est de préférence égale à (10 : 90).

L'utilisation d'un mélange d'une amine cyclo-aliphatique avec une amine aromatique en tant qu'agent durcisseur permet l'obtention d'un profilé longitudinal de renforcement en composite possédant une excellente tenue chimique et plus particulièrement de résistance à l'hydrolyse, ce qui est en accord avec les prérequis recherchés dans le domaine de l'offshore pétrolier. En outre, la mise en œuvre par pultrusion du profilé longitudinal s'en trouve améliorée comparativement à l'utilisation d'un agent durcisseur comprenant une amine aromatique ou une amine cyclo-aliphatique.

Selon un deuxième mode de réalisation préféré, le pré-polymère époxyde (i) est un DiGlycidyl Ether de Bisphénol F (DGEBF), et le au moins un agent durcisseur (ii) est une amine cyclo-aliphatique.

Ces premier et deuxième modes de réalisation préférés permettent d'optimiser la viscosité de la matrice avant polymérisation pour la fabrication par le procédé de pultrusion et permettent de plus de garantir une valeur de transition vitreuse de la matrice polymérisée supérieure à 170°C.

Aussi, la matrice résineuse polyépoxyde possède une faible absorption à l'eau et une très bonne résistance en service au phénomène d'hydrolyse ainsi qu'aux températures élevées.

En service, au sein d'une nappe d'armures de résistance à la traction 5,6, le profilé longitudinal 50 peut résister à une température élevée comprise entre 80°C et 180°C, avantageusement supérieure à 100°C et ce, pendant une durée de plusieurs dizaines d'années. Ainsi, les propriétés mécaniques du profilé longitudinal 50, et notamment son module d'élasticité en traction et sa limite à la rupture en traction, demeurent durablement stables dans cette gamme de température.

Le profilé longitudinal 50 peut aussi être soumis à un environnement acide et corrosif car contenant des gaz tels que le dioxyde de carbone, du sulfure d'hydrogène,... Comme cet environnement est confiné, il est propice à l'apparition de phénomènes d'hydrolyse et de corrosion.

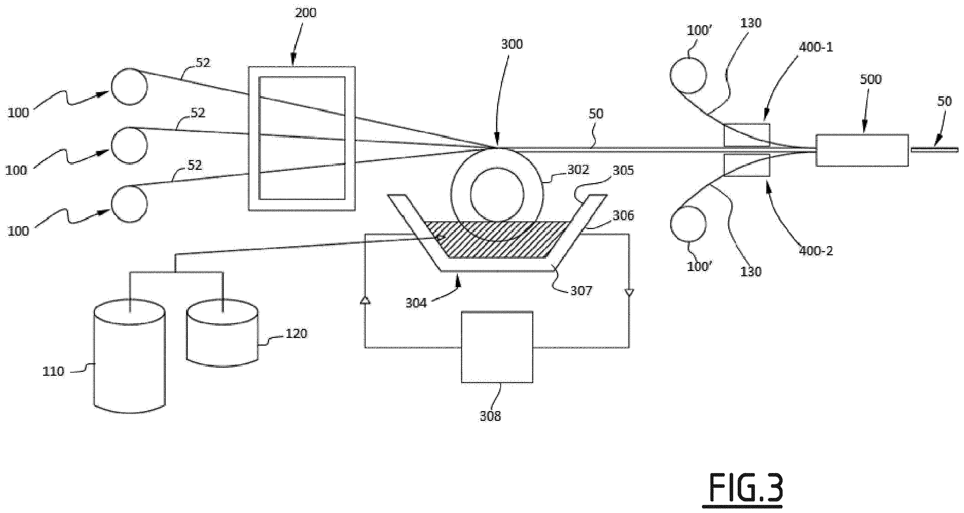

Comme décrit ci-avant, le profilé longitudinal 50 est fabriqué par pultrusion. Le procédé de fabrication du profilé longitudinal 50 est décrit sur la Figure 3 et comprend plusieurs étapes successives. Tout d'abord, par application d'un effort de traction, on tire sur les fibres longitudinales 52 de renfort ou mèches filamentaires en carbone (« strands » en langue anglaise) stockées au préalable sur des bobines 100 afin de les dérouler et les amener au travers d'un premier dispositif de chauffage 200, par exemple un four thermique ou un four à rayonnements (infrarouge, micro-ondes...).

Selon une variante, les fibres longitudinales 52 enroulées sur les bobines 100 ont subi un traitement de surface d'ensimage.

En passant au travers du premier dispositif de chauffage 200, on préchauffe les fibres longitudinales 52 à une température comprise entre 150°C et 180°C sans détériorer l'ensimage.

Les fibres longitudinales 52 sont ensuite entraînées vers un dispositif d'imprégnation 300 comportant un moyen d'imprégnation 302 chauffé tel qu'un tambour, un bac 304 à double paroi 305,306 thermorégulé par circulation d'un fluide réfrigérant 307 entre les parois et d'un moyen de circulation 308, par exemple une pompe centrifuge, pour permettre la circulation du fluide réfrigérant 307. Le bac 304 est destiné à recevoir le mélange thermodurcissable comprenant le pré-polymère époxyde (i) contenu dans un premier bidon 110 avec au moins un agent durcisseur (ii) de type amine contenu dans un second bidon 120. Le pré-polymère époxyde (i) et le au moins un agent durcisseur (ii) de type amine sont mélangés dans des proportions pondérales bien choisies, telles que décrites précédemment. Le mélange thermodurcissable ainsi obtenu est maintenu à basse température, aux environs de 5°C, de façon à retarder la polymérisation. Il est maintenu dans le bac 304 réfrigéré de façon à ce que son temps d'utilisation à température ambiante sans altération de ses propriétés
(ou « pot life » en anglais) soit le plus long possible.

En passant au travers du dispositif d'imprégnation 300, les fibres longitudinales 52 sont enduites d'un film de mélange thermodurcissable déposé par l'intermédiaire du tambour 302. L'imprégnation des fibres longitudinales 52 est particulièrement bonne du fait que le tambour est chauffé à une température comprise entre 40°C et 80°C, ce qui permet la fluidification du mélange thermodurcissable prélevé dans le bac 304. De plus, l'élévation de température du mélange thermodurcissable déposé par l'intermédiaire du tambour 302 permet le lancement de la polymérisation du mélange thermodurcissable.

En parallèle, on fournit au moins un voile de renfort 130 enroulé sur au moins une bobine de stockage 100'. Le au moins un voile de renfort 130 est déroulé, puis préséché et préchauffé à l'aide d'au moins un deuxième dispositif de chauffage 400-1, 400-2. Ce au moins deuxième dispositif de chauffage 400-1, 400-2 comprend avantageusement au moins des moyens de soufflage d'air chaud.

Selon une première variante d'exécution du procédé de fabrication, le au moins un voile de renfort 130 est préséché et préchauffé avant que les fibres longitudinales 52 soient préchauffées par le premier dispositif de chauffage 200. Selon une autre variante d'exécution, le au moins un voile de renfort 130 est préséché et préchauffé après que les fibres longitudinales 52 aient été préchauffées mais avant qu'elles aient été imprégnées. Enfin, selon une encore autre variante d'exécution, le au moins un voile de renfort 130 est préséché et préchauffé après que les fibres longitudinales 52 aient été imprégnées mais avant que le profilé longitudinal 50 soit préformé par un dispositif de conformation 500 ou filière de conformation.

Le voile de renfort ou mat 130 est une couche textile non tissée constituée de fibres courtes assemblées par compactage mécanique et/ou collage. Il est réalisé à partir de fibres résistantes à l'hydrolyse et/ou aux gaz contenus dans l'environnement confiné. Ces fibres sont choisies parmi les fibres de carbone, les fibres para-aramide tel que le Technora®, les fibres méta-aramide tel que le Nomex®, les fibres de basalte, les fibres de polyester, les fibres à hautes performances telles que les fibres de polymères à cristaux liquides (PCL) commercialisées par Vectran® ou les fibres de verre telles que les fibres S-2 commercialisées par AGY. Lorsque le profilé longitudinal 50 présente une section sensiblement rectangulaire, le mat 130 peut être appliqué sur l'une ou l'autre des grandes faces inférieure ou supérieure du profilé longitudinal 50 ou bien sur les deux grandes faces à la fois de façon à améliorer ses propriétés mécaniques.

Ensuite, le profilé longitudinal 50 est conduit au travers du dispositif de préformation 500 telle qu'une filière de conformation afin de lui donner la section définitive désirée.

Enfin, on enroule le profilé longitudinal 50 sur une bobine réceptrice non représentée. La bobine réceptrice et partant, le profilé longitudinal 50 sont envoyés vers un dispositif d'étuvage ou de post-cuisson, par exemple un four thermique, pour achever la réticulation du mélange thermodurcissable et ainsi former la matrice 54 résineuse polyépoxyde. L'étuvage se fait à une température d'au moins 180°C et dure au minimum 1h.

Aussi et de manière optionnelle, une dernière étape de découpage dudit profilé longitudinal 50 aux dimensions désirées peut être réalisée.

Selon une autre caractéristique de l'invention, une pluralité de profilés longitudinaux 50 de renforcement sont utilisés pour la réalisation d'au moins une couche de renfort d'une conduite 1 tubulaire flexible.

Pour fabriquer une nappe d'armures de résistance à la traction, les profilés longitudinaux 50 de renforcement sont enroulés à pas long selon un angle d'hélice de valeur absolue comprise entre 20° et 60°, de préférence entre 25° et 55°, cet angle d'hélice étant mesuré par rapport à l'axe longitudinal Δ de la conduite 1 tubulaire flexible.

Pour fabriquer une nappe d'armures de résistance à la pression, les profilés longitudinaux 50 sont enroulés à pas court selon un angle d'hélice de valeur absolue comprise entre 70° et 90° par rapport à l'axe Δ.

L'utilisation de profilés longitudinaux 50 conformes à la présente invention pour la réalisation d'une ou plusieurs couches de renfort 4 ; 5,6 de la conduite 1 tubulaire flexible, permet d'obtenir une conduite 1 flexible à la fois légère et très résistante mécaniquement, ce qui permet notamment son utilisation à grande profondeur. De plus, cela permet aussi à la conduite 1 flexible de mieux résister aux températures élevées ainsi qu'à l'hydrolyse lorsque celle-ci est exploitée dans des conditions de production sévères.

Bien entendu, le mode de réalisation décrit précédemment ainsi que l'utilisation qu'il en est faîte n'est donné qu'à titre d'exemples non limitatifs. D'autres variantes d'exécution peuvent être réalisées sans pour autant sortir du cadre de l'invention.

## Revendications

1. Profilé longitudinal (50) de renforcement en composite comprenant des fibres longitudinales (52) de carbone noyées dans une matrice (54) résineuse polyépoxyde obtenue par polymérisation d'un mélange thermodurcissable comportant un pré-polymère époxyde et au moins un agent durcisseur et optionnellement un catalyseur, dans lequel :
- le pré-polymère époxyde (i) est un DiGlycidyl Ether de Bisphénol A (DGEBA) ou un DiGlycidyl Ether de Bisphénol F (DGEBF) ou un TétraGlycidyl Méthylène DiAniline (TGMDA) ;
- le au moins un agent durcisseur (ii) est une amine cyclo-aliphatique ou une amine aromatique, ou un mélange d'une amine cyclo-aliphatique avec une amine aromatique ; et
- le ratio P₁/P₂ entre d'une part la proportion pondérale P₁ du au moins un agent durcisseur (ii) dans le mélange thermodurcissable et d'autre part la proportion pondérale P₂ du pré-polymère (i) dans le mélange thermodurcissable est compris entre 15% et 30%, et préférentiellement égale à 25%.

2. Profilé longitudinal (50) de renforcement selon la revendication 1, **caractérisé en ce que** le mélange thermodurcissable a une viscosité mesurée à 25°C,
selon la norme EN ISO 12058-1:1997, comprise entre 1000 mPa.s et 6000 mPa.s, de préférence entre 2000 mPa.s et 5000 mPa.s. et une viscosité mesurée entre 40°C et 80°C comprise entre 100 mPa.s et 1200 mPa.s.

3. Profilé longitudinal (50) de renforcement selon l'une quelconque des revendications 1 à 2, **caractérisé en ce que** le catalyseur est choisi parmi les monomères phénoliques, par exemple le bisphénol A ou parmi les monomères amines, par exemple la Benzyl Di-MethylAmine.

4. Profilé longitudinal (50) de renforcement selon la revendication 3, **caractérisé en ce que** le ratio P₃/P₂ entre d'une part la proportion pondérale P₃ du bisphénol A dans le mélange thermodurcissable et d'autre part la proportion pondérale P₂ du pré-polymère (i) dans le mélange thermodurcissable est compris entre 1% et 5%, et préférentiellement égale à 3%.

5. Profilé longitudinal (50) de renforcement selon l'une quelconque des revendications 1 à 4, **caractérisé en ce que** sa température maximale d'utilisation en continu est comprise entre 80°C et 180°C, avantageusement supérieure à 100°C.

6. Procédé de fabrication par pultrusion d'un profilé longitudinal (50) de renforcement en composite comprenant des fibres longitudinales (52) de carbone noyées dans une matrice (54) résineuse polyépoxyde obtenue par polymérisation d'un mélange thermodurcissable comportant :
- un pré-polymère époxyde qui est un DiGlycidyl Ether de Bisphénol A (DGEBA) ou un DiGlycidyl Ether de Bisphénol F (DGEBF) ou un TétraGlycidyl Méthylène DiAniline (TGMDA), et
- au moins un agent durcisseur qui est une amine cyclo-aliphatique ou une amine aromatique, ou un mélange d'une amine cyclo-aliphatique avec une amine aromatique, et
- optionnellement un catalyseur,
**caractérisé en ce que** le procédé comporte les étapes successives suivantes :
a) préchauffage des fibres longitudinales (52) à une température comprise entre 150°C et 180°C ;
b) imprégnation des fibres longitudinales (52) à l'aide d'un film de mélange thermodurcissable à une température comprise entre 40°C et 80°C et lancement de la polymérisation du mélange thermodurcissable ;
c) préformation ou conformation du profilé longitudinal (50) et poursuite de la polymérisation du mélange thermodurcissable ;
d) étuvage ou post-cuisson du profilé longitudinal (50) à une température d'au moins 180°C pendant au moins 1h.

7. Procédé de fabrication selon la revendication 6, **caractérisé en ce que** le profilé longitudinal (50) de renforcement fabriqué est selon l'une quelconque des revendications 1 à 5.

8. Procédé de fabrication selon la revendication 6 ou 7, **caractérisé en ce qu'**il comporte entre l'étape b) et l'étape c), une étape b1) d'application d'au moins un voile de renfort sur au moins une des faces du profilé longitudinal (50).

9. Procédé de fabrication selon la revendication 8, **caractérisé en ce qu'**il comporte une étape de préséchage et préchauffage du au moins un voile de renfort avant l'étape b1) ;

10. Procédé de fabrication selon l'une quelconque des revendications 6 à 9, **caractérisé en ce qu'**il comporte après l'étape d), une étape de découpage du profilé longitudinal (50).

11. Conduite (1) tubulaire flexible sous-marine pour le transport de fluides d'hydrocarbures comportant :
- une gaine interne d'étanchéité (3) ; et
- au moins une couche de renfort (4 ; 5, 6) comportant une pluralité de profilés longitudinaux (50) de renforcement en composite comprenant des fibres longitudinales (52) de carbone noyées dans une matrice (54) résineuse polyépoxyde obtenue par polymérisation d'un mélange thermodurcissable comportant :
- un pré-polymère époxyde qui est un DiGlycidyl Ether de Bisphénol A (DGEBA) ou un DiGlycidyl Ether de Bisphénol F (DGEBF) ou un TétraGlycidyl Méthylène DiAniline (TGMDA), et
- au moins un agent durcisseur qui est une amine cyclo-aliphatique ou une amine aromatique, ou un mélange d'une amine cyclo-aliphatique avec une amine aromatique, et
- optionnellement un catalyseur.

12. Conduite (1) tubulaire flexible sous-marine selon la revendication 11, dans laquelle les profilés longitudinaux (50) de renforcement sont selon l'une quelconque des revendications 1 à 5.

## Patentansprüche

1. Verstärkungslängsprofil (50) aus Verbundwerkstoff, aufweisend Kohlenstoff-Längsfasern (52), die in eine Polyepoxidharzmatrix (54) eingebettet sind, die durch Polymerisierung eines wärmehärtbaren Gemischs erhalten wird, das ein Epoxid-Präpolymer und mindestens ein Härtungsmittel und gegebenenfalls einen Katalysator aufweist, wobei:
- das Epoxidpräpolymer (i) ein Bisphenol-A-diglycidylether (DGEBA) oder ein Bisphenol-F-diglycidylether (DGEBF) oder ein Tetraglycidyl-methylendianilin (TGMDA) ist,
- das mindestens eine Härtungsmittel (ii) ein cycloaliphatisches Amin oder ein aromatisches Amin oder ein Gemisch aus einem cycloaliphatischen Amin mit einem aromatischen Amin ist, und
- das P₁/P₂-Verhältnis zwischen einerseits dem Gewichtsanteil P₁ des mindestens einen Härtungsmittels (ii) im wärmehärtbaren Gemisch und andererseits dem Gewichtsanteil P₂ des Präpolymers (i) im wärmehärtbaren Gemisch zwischen 15% und 30% beträgt und vorzugsweise gleich 25% ist.

2. Verstärkungslängsprofil (50) gemäß Anspruch 1, **dadurch gekennzeichnet, dass** das wärmehärtbare Gemisch eine bei 25°C gemäß EN ISO 12058-1:1997 gemessene Viskosität zwischen 1000 mPa.s und 6000 mPa.s, vorzugsweise zwischen 2000 mPa.s und 5000 mPa.s, und eine zwischen 40°C und 80°C gemessene Viskosität zwischen 100 mPa.s und 1200 mPa.s aufweist.

3. Verstärkungslängsprofil (50) gemäß irgendeinem der Ansprüche 1 bis 2, **dadurch gekennzeichnet, dass** der Katalysator aus phenolischen Monomeren, zum Beispiel Bisphenol A, oder aus Amin-Monomeren, zum Beispiel Benzyldimethylamin ausgewählt ist.

4. Verstärkungslängsprofil (50) gemäß Anspruch 3, **dadurch gekennzeichnet, dass** das P₃/P₂-Verhältnis zwischen einerseits dem Gewichtsanteil P₃ von Bisphenol A in dem wärmehärtbaren Gemisch und andererseits dem Gewichtsanteil P₂ des Präpolymers (i) im wärmehärtbaren Gemisch zwischen 1% und 5% beträgt und vorzugsweise gleich 3% ist.

5. Verstärkungslängsprofil (50) gemäß irgendeinem der Ansprüche 1 bis 4, **dadurch gekennzeichnet, dass** seine maximale Dauergebrauchstemperatur zwischen 80°C und 180°C, vorteilhafterweise über 100°C liegt.

6. Strangzieh-Herstellungsverfahren eines Verstärkungslängsprofils (50) aus Verbundwerkstoff, aufweisend Kohlenstoff-Längsfasern (52), die in eine Polyepoxidharzmatrix (54) eingebettet sind, die durch Polymerisieren eines wärmehärtbaren Gemischs erhalten wird, aufweisend:
- ein Epoxidpräpolymer (i), welches ein Bisphenol-A-diglycidylether (DGEBA) oder ein Bisphenol-F-diglycidylether (DGEBF) oder ein Tetraglycidyl-methylendianilin (TGMDA) ist, und
- mindestens ein Härtungsmittel (ii), welches ein cycloaliphatisches Amin oder ein aromatisches Amin oder ein Gemisch aus einem cycloaliphatischen Amin mit einem aromatischen Amin ist, und
- gegebenenfalls einen Katalysator,
**dadurch gekennzeichnet, dass** das Verfahren die folgenden aufeinanderfolgenden Schritte aufweist:
a) Vorwärmen der Längsfasern (52) auf eine Temperatur zwischen 150°C und 180°C,
b) Imprägnieren der Längsfasern (52) mit Hilfe eines Films aus einem wärmehärtbaren Gemisch bei einer Temperatur zwischen 40°C und 80°C und Initiieren der Polymerisierung des wärmehärtbaren Gemischs,
c) Vorformen oder Konformation des Längsprofils (50) und Fortführen der Polymerisierung des wärmehärtbaren Gemischs,
d) Tempern oder Nachbacken des Längsprofils (50) bei einer Temperatur von mindestens 180°C für mindestens 1 Stunde.

7. Verfahren zur Herstellung gemäß Anspruch 6, **dadurch gekennzeichnet, dass** das hergestellte Verstärkungslängsprofil (50) gemäß irgendeinem der Ansprüche 1 bis 5 ist.

8. Verfahren zur Herstellung gemäß Anspruch 6 oder 7, **dadurch gekennzeichnet, dass** es zwischen Schritt b) und Schritt c) einen Schritt b1) des Aufbringens mindestens einer Verstärkungsbahn auf mindestens eine der Flächen des Längsprofils (50) aufweist.

9. Verfahren zur Herstellung gemäß Anspruch 8, **dadurch gekennzeichnet, dass** es einen Schritt des Vortrocknens und Vorwärmens der mindestens einen Verstärkungsbahn vor Schritt b1) aufweist.

10. Verfahren zur Herstellung gemäß irgendeinem der Ansprüche 6 bis 9, **dadurch gekennzeichnet, dass** es nach Schritt d) einen Schritt des Schneidens des Längsprofils (50) aufweist.

11. Flexible Unterwasser-Rohrleitung (1) zum Transport von Kohlenwasserstoff-Fluiden, aufweisend:
- eine innere Dichtungshülle (3) und
- mindestens eine Verstärkungsschicht (4; 5, 6), aufweisend eine Mehrzahl von Verstärkungslängsprofilen (50) aus Verbundwerkstoff, aufweisend Kohlenstoff-Längsfasern (52), die in eine Polyepoxidharzmatrix (54) eingebettet sind, die durch Polymerisieren eines wärmehärtbaren Gemischs erhalten wird, aufweisend:
- ein Epoxidpräpolymer (i), welches ein Bisphenol-A-diglycidylether (DGEBA) oder ein Bisphenol-F-diglycidylether (DGEBF) oder ein Tetraglycidyl-methylendianilin (TGMDA) ist, und
- mindestens ein Härtungsmittel (ii), welches ein cycloaliphatisches Amin oder ein aromatisches Amin oder ein Gemisch aus einem cycloaliphatischen Amin mit einem aromatischen Amin ist, und
- gegebenenfalls einen Katalysator.

12. Flexible Unterwasser-Rohrleitung (1) gemäß Anspruch 11, wobei die Längsverstärkungsprofile (50) gemäß irgendeinem der Ansprüche 1 bis 5 sind.

## Claims

1. Composite longitudinal reinforcing profile (50) comprising longitudinal carbon fibres (52) embedded in a polyepoxy resinous matrix (54) obtained by polymerisation of a thermosetting blend comprising an epoxy prepolymer and at least one curing agent and optionally a catalyst, wherein:
- the epoxy prepolymer (i) is a DiGlycidyl Ether of Bisphenol A (DGEBA) or a DiGlycidyl Ether of Bisphenol F (DGEBF) or a TetraGlycidyl Methylene DiAniline (TGMDA);
- the at least one curing agent (ii) is a cycloaliphatic amine or an aromatic amine or a blend of a cycloaliphatic amine with an aromatic amine; and
- the P_{1/}P₂ ratio between the proportion by weight P₁ of the at least one curing agent (ii) in the thermosetting blend and the proportion by weight P₂ of the prepolymer (i) in the thermosetting blend is between 15% and 30% and is preferably equal to 25%.

2. Longitudinal reinforcing profile (50) according to claim 1,
**characterised in that** the thermosetting blend has a viscosity measured at 25°C, in accordance with standard EN ISO 12058-1:1997, of between 1000 mPa.s and 6000 mPa.s, preferably between 2000 mPa.s and 5000 mPa.s and a viscosity measured between 40°C and 80°C of between 100 mPa.s and 1200 mPa.s.

3. Longitudinal reinforcing profile (50) according to either of claims 1 to 2, **characterised in that** the catalyst is chosen from phenolic monomers, for example bisphenol A, or from amine monomers, for example BenzylDiMethylAmine.

4. Longitudinal reinforcing profile (50) according to claim 3, **characterised in that** the P₃/P₂ ratio between the proportion by weight P₃ of the bisphenol A in the thermosetting blend and the proportion by weight P₂ of the prepolymer (i) in the thermosetting blend is between 1% and 5% and preferably equal to 3%.

5. Longitudinal reinforcing profile (50) according to any of claims 1 to 4, **characterised in that** the maximum continuous usage temperature thereof is between 80°C and 180°C, advantageously greater than 100°C.

6. Method for manufacturing, by pultrusion, a composite longitudinal reinforcing profile (50) comprising longitudinal carbon fibres (52) embedded in a polyepoxy resinous matrix (54) obtained by polymerisation of a thermosetting blend comprising:
- an epoxy prepolymer which is a DiGlycidyl Ether of Bisphenol A (DGEBA) or a DiGlycidyl Ether of Bisphenol F (DGEBF) or a TetraGlycidyl Methylene DiAniline (TGMDA); and
- at least one curing agent which is a cycloaliphatic amine or an aromatic amine or a blend of a cycloaliphatic amine with an aromatic amine, and
- optionally a catalyst,
**characterised in that** the method comprises the following successive steps:
a) pre-heating the longitudinal fibres (52) to a temperature of between 150°C and 180°C;
b) impregnating the longitudinal fibres (52) using a film made of a blend that is thermosetting at a temperature of between 40°C and 80°C, and triggering the polymerisation of the thermosetting blend;
c) preforming or shaping the longitudinal profile (50) and continuing the polymerisation of the thermosetting blend;
d) baking or post-curing the longitudinal profile (50) at a temperature of at least 180°C for at least 1 h.

7. Manufacturing method according to claim 6, **characterised in that** the manufactured longitudinal reinforcing profile (50) is according to any of claims 1 to 5.

8. Manufacturing method according to claim 6 or 7, **characterised in that** it comprises, between step b) and step c), a step b1) of applying at least one reinforcing web over at least one of the faces of the longitudinal profile (50).

9. Manufacturing method according to claim 8, **characterised in that** it comprises a step of pre-drying and pre-heating the at least one reinforcing web before step b1).

10. Manufacturing method according to any of claims 6 to 9, **characterised in that** it comprises, after step d), a step of cutting the longitudinal profile (50).

11. Flexible undersea tubular pipe (1) for transporting hydrocarbon fluids, comprising:
- an internal leaktight sheath (3); and
- at least one reinforcing layer (4; 5, 6) comprising a plurality of composite longitudinal reinforcing profiles (50) comprising longitudinal carbon fibres (52) embedded in a polyepoxy resinous matrix (54) obtained by polymerisation of a thermosetting blend comprising:
- an epoxy prepolymer which is a DiGlycidyl Ether of Bisphenol A (DGEBA) or a DiGlycidyl Ether of Bisphenol F (DGEBF) or a TetraGlycidyl Methylene DiAniline (TGMDA); and
- at least one curing agent which is a cycloaliphatic amine or an aromatic amine or a blend of a cycloaliphatic amine with an aromatic amine; and
- optionally a catalyst.

12. Flexible undersea tubular pipe (1) according to claim 11, wherein the longitudinal reinforcing profiles (50) are according to any of claims 1 to 5.
